# EUROPEAN PATENT SPECIFICATION

(11) **EP 0 302 218 B1**
(45) Date of publication and mention of the grant of the patent: **07.04.1993**
(21) Application number: 88110319.6
(22) Date of filing: 28.06.1988
(51) Int. Cl.: C08G 75/02

(54) **Process for producing polyarylene sulfide**
Verfahren zur Herstellung von Polyarylensulfid
Procédé pour la préparation de polyarylène sulfide

(30) Priority: 30.06.1987 JP 165055/87
(43) Date of publication of application: 08.02.1989
(73) Proprietor: IDEMITSU PETROCHEMICAL CO. LTD., Tokyo 100 (JP)
(72) Inventor: Ogata, Norio, Sodegaura-cho Kimitsu-gun Chiba-ken (JP); Yamato, Hiroyasu, Sodegaura-cho Kimitsu-gun Chiba-ken (JP)
(74) Representative: TER MEER STEINMEISTER & PARTNER GbR

(56) References cited:
- EP-A- 0 215 312
- EP-A- 0 226 909
- US-A- 4 038 259
- US-A- 4 368 321
- US-A- 4 371 671

## Description

### BACKGROUND OF THE INVENTION

### (1) Field of the Invention

This invention relates to a process for producing a polyarylene sulfide and more particularly, it relates to a process for producing a polyarylene sulfide which can afford a polyarylene sulfide which is white and has high molecular weight and can be suitably used for the manufacture of, for example, various molded products, films, fibers and mechanical parts, electrical and electronical parts and besides, polar solvent can be recovered with less change in properties.

### (2) Description of Related Applications

Polyarylene sulfides such as polyphenylene sulfide are thermoplastic resins having partially thermosetting property and possess excellent properties as engineering plastics such as superior chemical resistance, good mechanical properties in a wide temperature range and good thermal resistance and stiffness.

It is known that polyarylene sulfides such as polyphenylene sulfide are normally obtained by subjecting a dihalogen aromatic compound and an alkali metal sulfide to polycondensation reaction in a polar solvent. For example, production of polyphenylene sulfide is normally performed by polycondensation reaction of p-dichlorobenzene and sodium sulfide in a polar solvent. (See Japanese Patent Kokoku No.52-12240).

When an alkali metal sulfide available in the form of hydrate is used, production of polyarylene sulfides requires two steps of dehydration of the water-containing alkali metal sulfide and polycondensation.

This dehydration step has been generally carried out by azeotropic distillation in the presence of a polar solvent. In this case, there are problems in that, for example, when the stainless steel container is corroded and impurities dissolved out from the inner wall of the container are incorporated into the polar solvent, the resulting polyarylene sulfide decreases in purity and whiteness or the polar solvent to be recovered is denatured.

On the other hand, a process is known which comprises carrying out reaction in the presence of an anhydrous metal sulfide, a metal carbonate, a dihalogen aromatic compound and a slight amount of water. (See Japanese Patent Kokai No.59-22926).

However, in this process, oligomers and the like are by-produced in large amounts and high molecular weight is difficult to obtain and besides, yield is low and a long time reaction is necessary for obtaining high molecular weight. Thus, this is industrially disadvantageous.

Further, Japanese Patent Kokai No.59-98133 discloses a process for the production of polyphenylene sulfide from dihalobenzene and a sulfur source.

That is, the invention disclosed in the above Japanese Patent Kokai is "a process for producing polyphenylene sulfide which comprises producing polyphenylene disulfide represented by the formula: 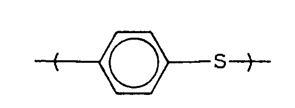
from p-dihalobenzene and a sulfur source in a organic amide polar solvent, characterized by carrying out the reaction in such a state that the water content in the system is 0.3-0.95 mol per mol of the sulfur source." as mentioned in the claim. According to the disclosure of the Japanese Patent Kokai, it is important in the process that the remaining water content in the system is adjusted to the 0.3-0.95 mols per mol of the sulfur source before beginning of polymerization and if the water content exceeds the above range, only a polyphenylene sulfide having practically undesirable properties can be obtained.

However, in the process for the production of polyphenylene sulfide disclosed in the above Japanese Patent Kokai, even if the polymerization is performed in the presence of water in an amount within the above range, the resulting polyphenylene sulfide is yellow in Example 1. Such coloration of polymer is considered due to the retention of catalyst residue in the polymer.

### SUMMARY OF THE INVENTION

The object of this invention is to provide a process for the efficient and stable production of a white and high molecular weight polyarylene sulfide which solves the above mentioned problems and avoids corrosion of the reaction apparatus and denaturation of the solvent to be recovered.

As a result of the inventors' intensive research in order to attain the above object, it has been found that a white and high molecular weight polyarylene sulfide can be efficiently and stably produced by pretreating a substantially anhydrous metal sulfide in a polar solvent in the presence of a specific polymerization aid and a slight amount of water and then adding thereto a dihalogen aromatic compound and carrying out polycondensation. This invention is based on this finding.

That is, this invention is a process for producing a polyarylene sulfide by contacting a dihalogen aromatic compound with a metal sulfide in a polar solvent which comprises carrying out in an autoclave a pretreatment of at least one metal sulfide selected from alkali metal sulfides and alkaline earth metal sulfides having a molar ratio of water/sulfide of 1.2 or less by heating to 45-230°C, 0.03-2.0 moles per mole of the metal sulfide of at least one anhydrous polymerisation aid selected from the group consisting of metal chlorides, metal carbonates and metal carboxylates, and water in an amount of 1.3-4.5 moles per one mole of said metal sulfide, and then reacting the thus pretreated metal sulfide with said dihalogen aromatic compound.

### DESCRIPTION OF PREFERRED EMBODIMENTS

The polar solvents used in the process of this invention include, for example, amide compounds, lactam compounds, urea compounds and cyclic organophosphorus compounds.

As typical examples of the polar solvents, mention may be made of N,N-dimethylformamide, N,N-dimethylacetamide, N,N-diethylacetamide, N,N-dipropylacetamide, N,N-dimethylbenzoic acid amide, caprolactam, N-methylcaprolactam, N-ethylcaprolactam, N-isopropylcaprolactam, N-isobutylcaprolactam, N-normalpropylcaprolactam, N-normalbutylcaprolactam, N-cyclohexylcaprolactam, N-methyl-2-pyrrolidone, N-ethyl-2-pyrrolidone, N-isopropyl-2-pyrrolidone, N-isobutyl-2-pyrrolidone, N-normalpropyl-2-pyrrolidone, N-normalbutyl-2-pyrrolidone, N-cyclohexyl-2-pyrrolidone, N-methyl-3-methyl-2-pyrrolidone, N-cyclohexyl-2-pyrrolidone, N-ethyl-3-methyl-2-pyrrolidone, N-methyl-3,4,5-trimethyl-2-pyrrolidone, N-methyl-2-piperidone, N-isopropyl-2-piperidone, N-methyl-2-piperidone, N-ethyl-2-piperidone, N-isopropyl-2-piperidone, N-methyl-6-methyl-2-piperidone, N-methyl-3-ethyl-2-piperidone, tetramethylurea, N,N'-dimethylethyleneurea, N,N'-dimethylpropyleneurea, 1-methyl-1-oxosulfolane, 1-ethyl-1-oxosulfolane, 1-phenyl-1-oxosulfolane, 1-methyl-1-oxophospholane, 1-normalpropyl-1-oxophospholane and 1-phenyl-1-oxophospholane.

These solvents may be used alone or in combination of two or more.

Among them, preferred are N-alkyllactams and N-alkylpyrrolidones and especially preferred is N-methylpyrrolidone.

As the dihalogen aromatic compounds [sometimes referred to as "component (A)" hereinafter], mention may be made of, for example, dihalogenobenzenes such as m-dihalogenobenzene and p-dihalobenobenzene; dihalogenoalkyl or cycloalkyl substituted benzenes such as 2,3-dihalogenotoluene, 2,5-dihalogenotoluene, 2,6-dihalogenotoluene, 3,4-dihalogenotoluene, 2,5-dihalogenoxylene, 1-ethyl-2,5-dihalogenobenzene, 1,2,4,5-tetramethyl-3,6-dihalogenobenzene, 1-normalhexyl-2,5-dihalogenobenzene and 1-cyclohexyl-2,5-dihalogenobenzene; dihalogenoaryl substituted benzenes such as 1-phenyl-2,5-dihalogenobenzene, 1-benzyl-2,5-dihalogenobenzene and 1-p-toluyl-2,5-dihalogenobenzene; dihalogenobiphenyls such as 1,4-dihalogenobiphenyl; and dihalogenonaphthalenes such as 1,4-dihalogenonaphthalene, 1,6-dihalogenonaphthalene and 2,6-dihalogenonaphthalene.

The two halogen elements in these dihalogene aromatic compounds are respectively fluorine, chlorine, bromine or iodine and they may be identical or different.

Among the above components (A), preferred are dihalogenobenzenes and especially preferred is p-dichlorobenzene.

The metal sulfide [hereinafter sometimes referred to as "component (B)] is at least one selected from alkali metal sulfides and alkaline earth metal sulfides with a molar ratio of water/sulfide of 1.2 or less (including 0).

The alkali metal sulfides used as the component (B) in this invention include, for example, lithium sulfide, sodium sulfide, potassium sulfide, rubidium sulfide and cesium sulfide. These may be used alone or in combination of two or more. Preferred are at least one selected from the group consisting of lithium sulfide and sodium sulfide and especially preferred is sodium sulfide.

The alkaline earth metal sulfides used as the component (B) in this invention include, for example, calcium sulfide, strontium sulfide, barium sulfide, beryllium sulfide and magnesium sulfide. These may be used alone or in combination of two or more. Among them, preferred is at least one selected from the group consisting of calcium sulfide and magnesium sulfide.

In the process of this invention, either one of said alkali metal sulfide or alkaline earth metal sulfide may be chosen and used or two or more of them may be used in combination.

The polymerization aid [hereinafter sometimes referred to as "component (C)] is at least one compound selected from the group consisting of metal chlorides, metal carbonates and metal carboxylates and those which are anhydrous are used.

As the above metal chlorides, mention may be made of, for example, lithium chloride, sodium chloride, potassium chloride, rubidium chloride, beryllium chloride, magnesium chloride, calcium chloride, strontium chloride, barium chloride, iron chloride (II), iron chloride (III), cobalt chloride (II), cobalt chloride (III), nickel chloride (II), nickel chloride (III), copper chloride (I), copper chloride (II), silver chloride, zinc chloride, aluminum chloride, gallium chloride (I), gallium chloride (III), titanium chloride (II), titanium chloride (III), vanadium chloride (II), vanadium chloride (III), vanadium chloride (IV), manganese chloride (II), manganese chloride (III), manganese chloride (IV), antimony chloride (III), antimony chloride (IV), antimony chloride (V), iridium chloride (I), iridium chloride (II), iridium chloride (III), iridium chloride (IV), indium chloride (I), indium chloride (III), cadmium chloride, tin chloride (II), tin chloride (IV) and lead chloride. Among them, preferred is at least one selected from the group consisting of lithium chloride and calcium chloride.

As the metal carbonates, mention may be made of, for example, lithium carbonate, sodium carbonate, potassium carbonate, magnesium carbonate, strontium carbonate, calcium carbonate, barium carbonate, iron carbonate (II), iron carbonate (III), copper carbonate, lead carbonate, cobalt carbonate (II), nickel carbonate, zinc carbonate, cadmium carbonate and manganese carbonate. Among them, preferred is at least one selected from the group consisting of lithium carbonate and calcium carbonate and especially preferred is lithium carbonate.

As the metal carboxylates, mention may be made of, for example, lithium acetate, sodium acetate, potassium acetate, magnesium acetate, strontium acetate, calcium acetate, iron acetate (II), iron acetate (III), copper acetate, lead acetate, chromium acetate, manganese acetate, lithium benzoate, sodium benzoate, potassium benzoate, magnesium benzoate, strontium benzoate, calcium benzoate, iron benzoate (II), iron benzoate (III), copper benzoate, lead benzoate, chromium benzoate, manganese benzoate, lithium oxalate, sodium oxalate, potassium oxalate, magnesium oxalate, strontium oxalate, calacium oxalate, iron oxalate (II), iron oxalate (III), copper oxalate, lead oxalate, chromium oxalate and manganese oxalate. Among them, preferred is at least one selected from the group consisting of lithium acetate, sodium acetate and lithium benzoate.

In the process of this invention, one of these metal chlorides, metal carbonates and metal carboxylates may be selected and used or two or more of them are selected and used in combination.

The water [hereinafter sometimes referred to as "component (D)] is preferably sufficiently purified one and, for example, distilled water and deionized water can be suitably used.

The ratios of the components used in this invention will be explained below.

The dihalogen aromatic compound which is the component (A) is used in an amount of, normally, 0.75-2.0 moles, preferably 0.90-1.2 mole per 1 mole of the metal sulfide which is the component (B). This is because the reaction between the dihalogen aromatic compound (A) and the metal sulfide (B) is an equimolar reaction.

The polymerization aid which is the component (C) is used in an amount of 0.03-2.0 moles, preferably 0.5-1.8 mole, per 1 mole of the metal sulfide which is the component (B). If this is less than 0.03 mole, sufficient activation is not attained and sometimes, a product of high molecular weight cannot be obtained. On the other hand, if it is more than 2.0 moles, the metal sulfide which is the component (B) is readily decomposed and polycondensation reaction with the dihalogen aromatic compound which is the component (A) does not fully proceed.

The water which is the component (D) is used in an amount of 1.3-4.5 moles, preferably 1.4-3.2 moles per 1 mole of the the metal sulfide of component (B). If this is less than 1.3 mole, the polymerization velocity is slow and high polymerization cannot be smoothly attained. If it is more than 4.5 moles, side-reactions occur and a high molecular weight product cannot be obtained and besides, the pressure inconveniently increases at polycondensation.

When, for example, lithium chloride, lithium carbonate, lithium acetate or lithium benzoate is used as component (C), these can be considered to be both the component (C) and the catalyst.

The amount of polar solvent used in the process of this invention has no special limitation as far as it is enough for the uniform proceeding of the reaction, but ordinarily it is 0.1-10 times the total weight of components (A), (B), (C) and (D) and the catalyst. If it is less than 0.1 time, sometimes the reaction does not sufficiently proceed and if it is more than 10 times, volumetric efficiency is deteriorated and the productivity decreases.

According to the process of this invention, the metal sulfide which is component (B) is pretreated at 45-230°C, preferably 80-200°C in the presence of the polymerization aid which is component (C) and water which is component (D). By this pretreatment, a complex composed of the metal sulfide (component (B)), the polymerization aid (Component (C)) and water (Component (D)) is produced and thus the metal sulfide (component (B)) is activated before the polycondensation reaction with the dihalogen aromatic compound (component (A)) and is rendered more reactive and hence the decomposition can be prevented and simultaneously corrosion of the reactor can be prevented.

When the pretreating temperature is lower than 45°C, the molecular weight of the resulting polymer is not sufficient. When it is higher than 230°C, it sometimes occurs that the metal sulfide (component (B)) is decomposed and the reaction does not sufficiently proceed. The time required for this pretreatment is normally 5 minutes - 4 hours, preferably 10 minutes - 3 hours. If this is less than 5 minutes, the reaction does not proceed sufficiently. On the other hand, even if the pretreatment is carried out for more than 4 hours, no effect corresponding to the treating time is developed and besides the corrosion of the reaction apparatus increases.

Further, according to the process of this invention, if necessary, branching agents such as active hydrogen-containing halogen aromatic compounds, polyhalogen aromatic compounds and halogen aromatic nitro compounds, molecular weight modifiers such as active hydrogen-containing compounds and monohalogen aromatic compound, liquid property adjusting agents such as alkali hydroxides, reducing agents and inert organic solvents may be optionally chosen and added at the polycondensation reaction of the dihalogen aromatic compound (component (A)) and the metal sulfide (component (B)). These additives are added preferably in substantially anhydrous state.

The above active hydrogen-containing halogen aromatic compounds are halogen aromatic compounds having a functional group containing an active hydrogen such as an amino group, a thiol group and a hydroxyl group. As examples thereof, mention may be made of dihaloanilines such as 2,6-dichloroaniline, 2,5-dichloroaniline, 2,4-dichloroaniline and 2,3-dichloroaniline; trihaloanilines such as 2,3,4-trichloroaniline, 2,3,5-trichloroaniline, 2,4,6-trichloroaniline and 3,4,5-trichloroaniline; dihaloaminodiphenyl ethers such as 2,2'-diamino-4,4'-dichlorodiphenyl ether and 2,4'-diamino-2', 4-dichlorodiphenyl ether; mixtures of these compounds and the above compounds wherein the amino group is replaced with a thiol group or a hydroxyl group. Further, there may also be used those active hydrogen-containing halogen aromatic compounds wherein a hydrogen atom bonding to a carbon atom in aromatic ring is replaced with other inert group such as a hydrocarbon group, e.g., an alkyl group. Among these active hydrogen-containing halogen aromatic compounds, preferred are active hydrogen-containing dihalogen aromatic compounds and especially preferred is dichloroaniline.

The above polyhalogen aromatic compounds include, for example, 1,2,4-trichlorobenzene, 1,3,5-trichlorobenzene and 1,4,6-trichloronaphthalene.

As the above halogen aromatic nitro compounds, mention may be made of, for example, mono or dihalonitrobenzenes such as 2,4-dinitrochlorobenzene and 2,5-dichloronitrobenzene; dihalonitrodiphenyl ethers such as 2-nitro-4,4'-dichlorodiphenyl ether; dihalonitrodiphenyl sulfones such as 3,3'-dinitro-4,4'-dichlorodiphenyl sulfone; mono or dihalonitropyridine such as 2,5-dichloro-3-nitropyridine and 2-chloro-3,5-dinitropyridine and various dihalonitronaphthalenes.

Use of these active hydrogen-containing halogen aromatic compounds, polyhalogen aromatic compounds or halogen aromatic nitrocompounds can perform further improvements in various characteristics of the polymers obtained by the process of this invention, for example, increase in degree of branching, further increase in molecular weight and reduction of remaining salt content.

As the above mentioned monohalogen aromatic compounds, mention may be made of, for example, chlorobenzene, bromobenzene, α-bromobenzene, α-chlorotoluene, o-chlorotoluene, m-chlorotoluene, p-chlorotoluene, α-bromotoluene, o-bromotoluene, m-bromotoluene and p-bromotoluene.

The above mentioned active hydrogen-containing compounds include, for example, thiophenol, phenol and aniline.

As branching agents or molecular weight modifiers, compounds having three or more active halogen atoms such as cyanuric chloride can be used besides the above enumerated compounds.

These branching agents or molecular weight modifiers may be used alone or in combination of two or more.

The reducing agents include, for example, hydrazine, metal hydrides, alkali formates and sulfur, among which metal hydrides are preferred and sodium borohydride and calcium hydride are especially preferred.

As the inert solvents, mention may be made of, for example, hydrocarbons such as benzene, toluene, xylene, biphenyl, terphenyl, naphthalene and anthracene and ethers such as diphenyl ether, p-diphenoxybenzene, polyethylene glycol and dioxane. Among them, high boiling inert organic solvents are preferred.

The production of polyarylene sulfides according to the process of this invention is performed, for example, in the following manner.

That is, first, necessary amounts of the metal sulfide [component (B)], the polymerization aid [component (C)] and water [component (D)] are added to a polar solvent and pretreatment is effected at 45-230°C for 5 minutes - 4 hours and then thereto are added the dihalogen aromatic compound [component (A)] and necessary additives and the mixture is heated to normally 180-330°C, preferably 220-300°C to carry out polycondensation reaction. If this reaction temperature is lower than 180°C, the reaction velocity is slow and this is not practical. If it is higher than 330°C, there occur side-reactions and deterioration of the resulting polymer to cause coloration and gelation of the product. The reaction time varies depending on the kinds and amounts of the components used, kind and amount of catalyst and reaction temperature and cannot be generally determined, but usually is 20 hours or less, preferably 0.1-8 hours.

In the process of this invention, the polycondensation reaction can be effected in an inert gas atmosphere such as nitrogen, argon or carbon dioxide.

The reaction pressure is not critical, but normally is from spontaneous pressure of solvent and the like in the polycondensation reaction system to 4.9 MPa (50 kg/cm²) (absolute pressure). Further, the reaction may be a one step reaction effected at normal temperature, a multi-step reaction effected by increasing the temperature stepwise or of such a type as gradually and continuously increasing the temperature.

Then, the isolated polymer is washed with ordinarily water, methanol, acetone or the like to remove alkali metal halides, alkali metal sulfides, polymerization aids and side-reaction products which adhere to the polymer. It is also possible to distill off and recover the solvent without isolating the resulting polymer from the solution after termination of reaction and to wash the residue in the above mentioned manner, thereby to obtain the polymer. The recovered solvent can be reused.

The thus obtained polyarylene sulfide can be processed to various molding materials and be utilized and, if necessary, can be subjected to various desalting treatments to further reduce the content of salt, such as sodium chloride, in the polymer. The thus treated product can be suitably used in electric and electronic fields.

When the polyarylene sulfide obtained by the process of this invention is molded to various articles, there may be added other polymers, pigments, fillers such as graphite, metallic powders, quartz powders, glass powders, glass fibers, stabilizers, releasing agents and the like.

This invention can provide an industrially advantageous process for producing polyarylene sulfide which has the following various merits:
(1) Corrosion of reaction apparatus does not occur since a specific metal sulfide is pretreated under specific conditions.
(2) Polyarylene sulfides having high whiteness and high molecular weight can be produced stably and in high yields.
(3) Dehydration step is not required and polar solvent with only little denaturation can be recovered and reused.

This invention is further explained by the following examples and comparative examples.

### Example 1

48.03 Grams (0.543 mol) of sodium sulfide 0.5 hydrate (purity 88.2% in terms of Na₂S), 35.8 g (0.543 mol) of lithium acetate, 10 ml (0.555 mol) of water and 206 ml of N-methylpyrrolidone were charged in a one liter autoclave made of SUS 316L and were heated at 150°C for 20 minutes.

Then, the temperature was reduced to 90°C and the autoclave was opened and thereto were added 79.8 g (0.543 mol) of p-dichlorobenzene and 99 ml of N-methylpyrrolidone, followed by closing the autoclave and then reaction was allowed to proceed at 260°C for 3 hours.

After leaving the autoclave overnight, the resulting reaction mixture was introduced into 1 liter of water and separated by filtration and washed with water twice and then with acetone to obtain a white polymer.

The resulting polymer was white and the yield of the polymer was 90.5% (53.1 g). The polymer had a solution viscosity ηᵢₙₕ of 0.20 measured using a 1-chloronaphthalene solvent of 0.4 g/dl in concentration at 206°C. The recovered N-methylpyrrolidone was light brown and no rust occurred in the autoclave.

### Example 2

Example 1 was repeated except that 23.0 g (0.543 mol) of lithium chloride was used in place of 35.8 g (0.543 mol) of lithium acetate, amount of water was changed from 10 ml (0.555 mol) to 18.5 ml (1.03 mol) and the pretreatment conditions of 150°C and 20 minutes were changed to 155°C and 5 minutes, respectively. A white polymer was obtained.

The yield of the white polymer was 88.2% (51.8 g) and the solution viscosity ηᵢₙₕ was 0.27. The recovered N-methylpyrrolidone was light brown and autoclave gathered no rust.

### Example 3

Example 1 was repeated except that 0.288 g (0.0015 mol) of 2,5-dichloronitrobenzene was used together with p-dichlorobenzene and a white polymer was obtained.

The yield of the resulting white polymer was 89.9% (52.8 g) and the solution viscosity ηᵢₙₕ thereof was 0.33. The recovered N-methylpyrrolidone was light brown and the autoclave gathered no rust.

### Example 4

Example 2 was repeated except that 40.12 g (0.543 mol) of lithium carbonate was used in place of 23.0 g (0.543 mol) of lithium chloride and a white polymer was obtained.

The yield of the polymer was 93.5% (54.9 g) and the solution viscosity ηᵢₙₕ thereof was 0.12. The recovered N-methylpyrrolidone was light brown and the autoclave gathered no rust.

### Example 5

Example 2 was repeated except that 30.2 g (0.272 mol) of calcium chloride was used in place of 23.0 g (0.543 mol) of lithium chloride and a white polymer was obtained.

The yield of the white polymer was 82.1% (49.0 g) and the polymer had a solution viscosity ηᵢₙₕ of 0.08. The recovered N-methylpyrrolidone was light brown and the autoclave gathered no rust.

### Comparative Example 1

This was an example in which lithium chloride was used at a mole ratio of 0.5 mol (H₂O/Na₂S). This mole ratio was within the ratio represented in the claims of Japanese Patent Kokai No. 59-98133.

48.03 g (0.543 mol) of sodium sulfide 0.5 hydrate (purity 88.2% in terms of Na₂S), 23.0 g (0.543 mol) of lithium chloride, 79.8 g (0.543 mol) of p-dichlorobenzene and 304 ml of N-methylpyrrolidone were charged in a 1 liter autoclave made of SUS 316L and heated at 260°C for 3 hours.

After leaving it overnight, the resulting reaction mixture was poured in 1 liter of water, separated by filtration and washed with water twice and then with acetone.

The resulting polymer was light brown and had a solution viscosity ηᵢₙₕ of 0.01 and the yield was 15.8% (9.3 g). After termination of the reaction, a portion of the reaction mixture was taken and subjected to measurement of amount of the residual p-dichlorobenzene by gas chromatography (column: PEG 20M chromosorb, 2 m, temperature 210°C) to obtain a residual rate of p-dichlorobenzene of 75%.

As is clear from the above, the yield of the polymer obtained in this Comparative Example is smaller than that in Examples 1-5 and besides the polymer obtained in this comparative example was smaller in molecular weight and inferior in purity.

### Comparative Example 2

Example 1 was repeated except that lithium acetate was not used.

The resulting polymer was brown and had a solution viscosity ηᵢₙₕ of 0.06 and the yield was 78.0% (45.8 g). After termination of the reaction, a portion of the reaction mixture was taken and subjected to measurement of amount of the residual p-dichlorobenzene by gas chromatography (column: PEG 20M chromosorb, 2 m, temperature 210°C) to obtain a residual rate of p-dichlorobenzene of 16.2%.

As is clear from the above, the yield of the polymer obtained in this comparative example was lower than that of any polymers obtained in Examples 1-5 and besides the polymer obtained in this comparative example was smaller in molecular weight and inferior in purity.

### Comparative Example 3

A polymer was obtained in the same manner as in Example 2 except that the reaction was effected by stirring the initial mixture at room temperature for 15 minutes and then adding thereto p-dichlorobenzene.

The resulting polymer was white and had a solution viscosity ηᵢₙₕ of 0.05 and the yield was 56.0% (32.1 g). After termination of the reaction, a portion of the reaction mixture was taken and subjected to measurement of amount of the residual p-dichlorobenzene by gas chromatography (column: PEG 20M chromosorb, 2 m, temperature 210°C) to obtain a residual rate of p-dichlorobenzene of 38%.

As is clear from the above, the yield of the polymer obtained in this comparative example was lower than that of any polymers obtained in Examples 1-5 and besides the polymer obtained in this comparative example was smaller in molecular weight and inferior in purity.

### Comparative Example 4

Example 1 was repeated except that the amount of water was 48.9 ml.

The resulting polyphenylene sulfide was brown and the yield thereof was 47%. Further, it had a solution viscosity ηᵢₙₕ of 0.09 measured using a 1-choloronaphthalene solvent of 0.4 g/dl in concentration at 206°C. The recovered N-methylpyrrolidone was dark brown and the autoclave gathered rust.

## Claims

1. A process for producing a polyarylene sulfide by contacting a dihalogen aromatic compound with a metal sulfide in a polar solvent which comprises (1) carrying out in an autoclave a pre-treatment of at least one metal sulfide, optionally containing water (molar ratio water/metal sulfide of 1.2 or less), selected from the group consisting of alkali metal sulfides and alkaline earth metal sulfides by heating to 45-230°C a mixture of the metal sulfide, 0.03-2.0 moles (per mole of metal sulfide) of at least one anhydrous polymerization aid selected from the group consisting of metal chlorides, metal carbonates and metal carboxylates and 1.3-4.5 moles (per mole of metal sulfide) of water, and then (2) reacting the pre-treated metal sulfide with said dihalogen aromatic compound.

2. A process according to claim 1 wherein the polar solvent is at least one compound selected from the group consisting of amide compounds, lactam compounds, urea compounds and cyclic organophosphorus compounds.

3. A process according to claim 1 wherein the polar solvent is an amide compound.

4. A process according to claim 1 wherein the polar solvent is at least one compound selected from the group consisting of N-alkyllactams and N-alkylpyrrolidones.

5. A process according to claim 1 wherein the dihalogen aromatic compound is a dihalogenobenzene.

6. A process according to claim 1 wherein the dihalogen aromatic compound is a p-dihalogenobenzene.

7. A process according to claim 1 wherein the alkali metal sulfide is at least one compound selected from the group consisting of lithium sulfide and sodium sulfide.

8. A process according to claim 1 wherein the alkaline earth metal sulfide is at least one compound selected from the group consisting of calcium sulfide and magnesium sulfide.

9. A process according to claim 1 wherein the metal chloride is at least one compound selected from the group consisting of lithium chloride and calcium chloride.

10. A process according to claim 1 wherein the metal carbonate is at least one compound selected from the group consisting of lithium carbonate and calcium carbonate.

11. A process according to claim 1 wherein the metal carboxylate is at least one compound selected from the group consisting of lithium acetate, sodium acetate and lithium benzoate.

12. A process according to claim 1 wherein amount of the dihalogen aromatic compound is 0.75-2.0 mols per 1 mol of the metal sulfide.

13. A process according to claim 1 wherein a halogen aromatic nitro compound is allowed to be present in contacting of the metal sulfide with the dihalogen aromatic compound.

## Patentansprüche

1. Verfahren zur Herstellung eines Polyarylensulfids durch Kontaktieren einer aromatischen Dihalogenverbindung mit einem Metallsulfid in einem polaren Lösungsmittel, umfassend (1) die Durchführung, in einem Autoklaven, einer Vorbehandlung mindestens eines Metallsulfids, welches wahlweise Wasser enthält (molares Verhältnis von Wasser/Metallsulfid von 1,2 oder weniger), welches aus der aus Alkalimetallsulfiden und Erdalkalimetallsulfiden bestehenden Gruppe gewählt wird, durch Erhitzen auf 45-230 °C einer Mischung aus dem Metallsulfid, 0,03-2,0 Molen (pro Mol Metallsulfid) mindestens einer wasserfreien Polymerisationshilfe, welche aus der aus Metallchloriden, Metallcarbonaten und Metallcarboxylaten bestehenden Gruppe gewählt wird, und 1,3-4,5 Molen (pro Mol Metallsulfid) Wasser, und danach (2) Umsetzen des vorbehandelten Metallsulfids mit der aromatischen Dihalogenverbindung.

2. Verfahren nach Anspruch 1, wobei das polare Lösungsmittel mindestens eine Verbindung ist, welche aus der aus Amidverbindungen, Lactamverbindungen, Harnstoffverbindungen und zyklischen Organophosphorverbindungen bestehenden Gruppe gewählt wird.

3. Verfahren nach Anspruch 1, wobei das polare Lösungsmittel eine Amidverbindung ist.

4. Verfahren nach Anspruch 1, wobei das polare Lösungsmittel mindestens eine Verbindung ist, welche aus der aus N-Alkyllactamen und N-Alkylpyrrolidonen bestehenden Gruppe gewählt wird.

5. Verfahren nach Anspruch 1, wobei die aromatische Dihalogenverbindung ein Dihalogenbenzol ist.

6. Verfahren nach Anspruch 1, wobei die aromatische Dihalogenverbindung ein p-Dihalogenbenzol ist.

7. Verfahren nach Anspruch 1, wobei das Alkalimetallsulfid mindestens eine Verbindung ist, welche aus der aus Lithiumsulfid und Natriumsulfid bestehenden Gruppe gewählt wird.

8. Verfahren nach Anspruch 1, wobei das Erdalkalimetallsulfid mindestens eine Verbindung ist, welche aus der aus Kalziumsulfid und Magnesiumsulfid bestehenden Gruppe gewählt wird.

9. Verfahren nach Anspruch 1, wobei das Metallchlorid mindestens eine Verbindung ist, welches aus der aus Lithiumchlorid und Kalziumchlorid bestehenden Gruppe gewählt wird.

10. Verfahren nach Anspruch 1, wobei das Metallcarbonat mindestens eine Verbindung ist, welche aus der aus Lithiumcarbonat und Kalziumcarbonat bestehenden Gruppe gewählt wird.

11. Verfahren nach Anspruch 1, wobei das Metallcarboxylat mindestens eine Verbindung ist, welche aus der aus Lithiumacetat, Natriumacetat und Lithiumbenzoat bestehenden Gruppe gewählt wird.

12. Verfahren nach Anspruch 1, wobei die Menge der aromatischen Dihalogenverbindung 0,75-2,0 Mole pro 1 Mol des Metallsulfids beträgt.

13. Verfahren nach Anspruch 1, wobei das Kontaktieren des Metallsulfids mit der aromatischen Dihalogenverbindung in Gegenwart einer aromatischen Halogennitroverbindung erfolgt.

## Revendications

1. Procédé de préparation d'un sulfure de polyarylène par contact d'un composé dihalogéné aromatique avec un sulfure métallique dans un solvant polaire qui comprend :
(1) la réalisation d'un pré-traitement dans un autoclave d'au moins un sulfure métallique, contenant éventuellement de l'eau (rapport molaire eau/sulfure métallique d'au plus 1,2), choisi parmi des sulfures de métaux alcalins et des sulfures de métaux alcalino-terreux en chauffant de 45 à 230°C un mélange de sulfure métallique, 0,03 à 2,0 moles (par mole de sulfure métallique) d'au moins un adjuvant anhydre de polymérisation choisi parmi des chlorures métalliques, des carbonates métalliques et des carboxylates métalliques et 1,3 à 4,5 moles (par mole de sulfure métallique) d'eau; et ensuite,
(2) en faisant réagir le sulfure métallique pré-traité avec ledit composé dihalogéné aromatique.

2. Procédé selon la revendication 1, dans lequel le solvant polaire est au moins un composé choisi parmi des composés amide , des composés lactame, des composés urée et des composés cycliques organophosphoreux.

3. Procédé selon la revendication 1, dans lequel le solvant polaire est un composé amide.

4. Procédé selon la revendication 1, dans lequel le solvant polaire est au moins un composé choisi parmi des N-alkyllactames et des N-alkylpyrrolidones.

5. Procédé selon la revendication 1, dans lequel le composé dihalogéné aromatique est un dihalogénobenzène.

6. Procédé selon la revendication 1, dans lequel le composé dihalogéné aromatique est un p-dihalogénobenzène.

7. Procédé selon la revendication 1, dans lequel le sulfure de métal alcalin est au moins un composé choisi parmi le sulfure de lithium et le sulfure de sodium.

8. Procédé selon la revendication 1, dans lequel le sulfure de métal alcalino-terreux est au moins un composé choisi parmi le sulfure de calcium et le sulfure de magnésium.

9. Procédé selon la revendication 1, dans lequel le chlorure métallique est au moins un composé choisi parmi le chlorure de lithium et le chlorure de calcium.

10. Procédé selon la revendication 1, dans lequel le carbonate métallique est au moins un composé choisi parmi le carbonate de lithium et le carbonate de calcium.

11. Procédé selon la revendication 1, dans lequel le carboxylate métallique est au moins un composé choisi parmi l'acétate de lithium, l'acétate de sodium et le benzoate de lithium.

12. Procédé selon la revendication 1, dans lequel la proportion en composé dihalogéné aromatique est de 0,75 à 2,0 moles pour 1 mole du sulfure métallique.

13. Procédé selon la revendication 1, dans lequel un composé halogéné aromatique nitreux peut être présent lors du contact du sulfure métallique avec le composé dihalogéné aromatique.
